# FASCICULE DE BREVET EUROPEEN

(11) **EP 2 576 112 B1**
(45) Date de publication et mention de la délivrance du brevet: **02.04.2014**
(21) Numéro de dépôt: 11725485.4
(22) Date de dépôt: 12.05.2011
(51) Int. Cl.: B23C 3/30, B23C 7/00, F01D 5/30

(54) **PROCÉDÉ D'USINAGE D'ALVÉOLES D'UN DISQUE DE TURBINE D'UNE TURBOMACHINE**
VERFAHREN ZUR BEARBEITUNG VON HOHLRÄUMEN IN EINER TURBOMASCHINENTURBINENSCHEIBE
METHOD FOR MACHINING CAVITIES IN A TURBOMACHINE TURBINE DISC

(30) Priorité: 27.05.2010 FR 1054110
(43) Date de publication de la demande: 10.04.2013
(73) Titulaire: Snecma, 75015 Paris (FR)
(72) Inventeur: BELMONTE, Olivier, F-77550 Moissy Cramayel Cedex (FR); LEBOULANGER, Jean-Pierre, F-77550 Moissy Cramayel Cedex (FR); VARONE, Bruno, F-77550 Moissy Cramayel Cedex (FR); WELLER, Lionel, René, Henri, F-77550 Moissy Cramayel Cedex (FR)
(74) Mandataire: Ramey, Daniel
(86) Numéro de dépôt international: PCT/FR2011/051069
(87) Numéro de publication internationale: WO 2011/148074

(56) Documents cités:
- WO-A1-2004/052578
- DE-U1-202009 010 113
- FR-A1- 2 591 523
- GB-A- 2 451 569
- LU-A2- 91 336
- US-A- 1 614 558
- US-A1- 2009 187 269

## Description

La présente invention concerne un procédé d'usinage d'alvéoles d'un disque de turbine d'une turbomachine, telle qu'un turboréacteur ou un turbopropulseur d'avion.

Une turbine de ce type comprend en général plusieurs roues aubagées comportant chacune un disque à la périphérie externe duquel sont formés des alvéoles d'engagement des pieds d'aubes, régulièrement répartis autour de l'axe du disque. Chaque aube comprend à son extrémité radialement interne une plate-forme reliée à un pied, et à son extrémité radialement externe un talon portant des léchettes externes qui sont destinées à coopérer en fonctionnement avec des blocs de matière abradable fixés sur le stator de la turbine, pour former des joints d'étanchéité du type à labyrinthe.

Les alvéoles sont généralement usinés par brochage. Selon cette technique, l'outil de coupe utilisé est une broche rectiligne comportant une série de dents espacées longitudinalement les unes des autres. Chaque alvéole est réalisé par déplacement rectiligne de la broche par rapport au disque, de manière à usiner, dent après dent, la périphérie externe du disque. La forme et la dimension des dents varient d'une extrémité à l'autre de la broche, celles de la dernière dent à usiner le disque devant correspondre à celles de l'alvéole. Plusieurs broches successives sont en général utilisées, afin de s'approcher progressivement, broche après broche, de la section définitive de l'alvéole à obtenir. L'opération est répétée pour chacun des alvéoles à réaliser.

On comprend qu'un tel procédé est fastidieux à mettre en oeuvre et nécessite un encombrement important, dû à la longueur importante des broches qui peut être comprise entre 6 et 8 mètres.

En outre, la turbine comporte plusieurs disques assemblés les uns aux autres. L'usinage des alvéoles par brochage ne peut être effectué que pour un seul disque à la fois, puisque l'accès des deux côtés du disque doit être possible, et cela sur des longueurs importantes. Les disques doivent donc être usinés séparément puis assemblés, les uns à proximité des autres.

Enfin, une telle technique d'usinage ne peut pas être utilisée pour tous les matériaux. En particulier, il n'est pas possible d'utiliser la technique du brochage lorsque le disque est en un alliage à base de nickel, alliage dont le taux d'usinabilité est le double de celui d'un alliage classique à base de titane.

Afin de résoudre en partie ces inconvénients, le document US 2009/0187269 propose un procédé d'usinage d'un disque consistant à usiner chaque alvéole à l'aide d'une fraise dite de forme. La section de fraise correspond alors à la section de l'alvéole à obtenir, l'axe de la fraise étant sensiblement radial par rapport au disque et étant déplacé d'une face à l'autre du disque parallèlement à l'axe du disque pour former l'alvéole.

L'usinage à l'aide d'une fraise de forme ne peut toutefois pas être utilisé pour des alvéoles de faible section ou pour des disques en alliage à base de nickel, à cause de la fragilité de ce type de fraise. En outre, pour chaque forme d'alvéole, il est nécessaire de réaliser au préalable une fraise de forme correspondante, ce qui est coûteux et oblige à changer de fraise très fréquemment, le profil de la fraise après usure ne correspondant plus au profil de l'alvéole à réaliser.

L'invention a notamment pour but d'apporter une solution simple, efficace et économique à ce problème.

A cet effet, elle propose un procédé d'usinage d'alvéoles périphériques d'un disque de turbine d'une turbomachine, telle qu'un turboréacteur ou un turbopropulseur d'avion, caractérisé en ce qu'il consiste à usiner les alvéoles par fraisage à l'aide d'une fraise sensiblement cylindrique, de longueur supérieure à l'épaisseur axiale du disque, et s'étendant sensiblement parallèlement à l'axe du disque, le contour des alvéoles étant usiné par déplacement de la fraise perpendiculairement à son axe le long du profil de chaque alvéole.

Ainsi, la fraise pénètre, non pas axialement, mais radialement dans la périphérie externe du disque, de sorte que ce procédé peut être utilisé même lorsque les disques sont assemblés et peu écartés les uns des autres. De plus, la fraise cylindrique, qui est une fraise conventionnelle, est moins fragile qu'une fraise de forme, de sorte qu'il est possible d'usiner des matériaux très résistants, tels que les alliages à base de nickel. Enfin, une même fraise permet d'usiner plusieurs formes d'alvéoles.

Selon une caractéristique préferentielle de l'invention, le sens de rotation de la fraise est tel que le fraisage est réalisé en avalant, c'est-à-dire que le sens d'avance des dents de la fraise correspond au sens d'avance de la fraise par rapport au matériau à usiner.

Le fraisage en avalant génère moins de vibrations et améliore la qualité de la coupe.

Bien entendu, le fraisage pourrait également être réalisé en opposition, c'est-à-dire que le sens d'avance des dents de la fraise est opposé au sens d'avance de la fraise par rapport au matériau à usiner.

Selon une caractéristique préferentielle de l'invention, le disque de turbine est un disque de turbine basse pression, qui est réalisé en alliage à base de nickel.

Dans un mode de réalisation de l'invention, la fraise est tenue à chacune de ses extrémités par un support d'outil, l'une au moins des extrémités de la fraise étant entraînée en rotation par des moyens d'entraînement.

Un tel maintien de la fraise permet de limiter les déformations de la fraise et, par conséquent, un mauvais dimensionnement de l'alvéole usiné, tout en limitant les risques de casse de l'outil.

La fraise peut être réalisée en carbure de tungstène, en céramique ou en acier rapide.

De manière préférée, la fraise comporte entre 2 et 8 dents, l'angle d'hélice de la fraise, c'est-à-dire l'angle compris entre l'axe de la fraise et l'inclinaison de la denture, étant compris entre 10 et 20°.

La vitesse de coupe de la fraise est de préférence comprise entre 40 et 70 m/min.

Plus particulièrement, la vitesse de coupe est comprise entre 60 et 70 m/min lorsque le disque est réalisé dans un alliage à base de titane, et est comprise entre 40 et 50 m/min lorsque le disque est réalisé dans un alliage à base de nickel, lorsque les outils sont réalisés en carbure de tungstène. Les vitesses de coupe peuvent être plus élevées avec des outils en céramique.

De manière avantageuse, le procédé d'usinage comprend au moins une phase d'ébauche et une phase de finition.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est vue partielle et en coupe d'un assemblage de deux disques d'une turbine basse pression d'un turboréacteur ;
- la figure 2 est une vue schématique, en perspective, d'une fraise et de son support ;
- la figure 3 est une vue en perspective illustrant le fraisage d'un alvéole de l'un des disques de la figure 1 ;
- la figure 4 est une vue de détail en perspective illustrant de fraisage de l'alvéole, dans laquelle seul un bras du support de fraise est représenté ;
- la figure 5 est une vue schématique de face de l'alvéole, illustrant le sens de rotation de la fraise et le sens de déplacement de celle-ci à l'intérieur de l'alvéole.

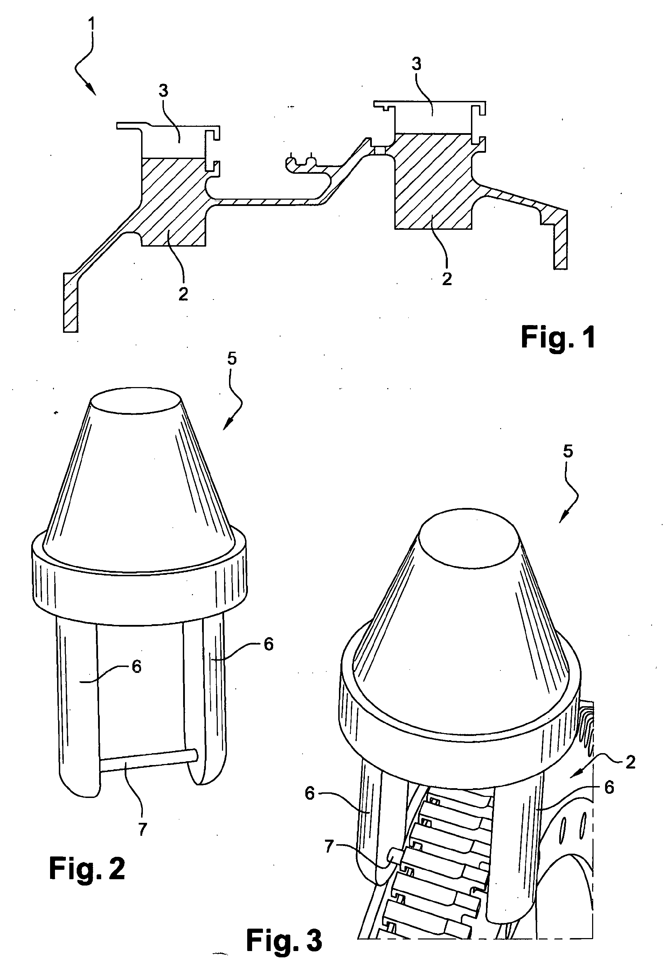

La figure 1 représente un assemblage 1, également appelé « spool », de deux disques 2 d'une turbine basse pression d'un turboréacteur d'avion. Chaque assemblage 1 est réalisé par soudure des deux disques 2, le cordon de soudure ainsi formé étant ensuite traité thermiquement.

La turbine basse pression comporte plusieurs assemblage 1 de ce type fixés par boulonnage les uns aux autres.

Chaque disque 2 est réalisé en un alliage à base de nickel, et comporte des alvéoles 3 en queue d'aronde débouchant au niveau de sa périphérie externe 4, destinés à coopérer avec des pieds d'aubes non représentés.

On s'intéressera plus particulièrement dans ce qui suit à l'usinage de ces alvéoles 3. Pour cela, on utilise une fraiseuse comportant un support de fraise 5 comprenant deux bras parallèles 6 dont les extrémités tiennent chacune une extrémité d'une fraise cylindrique 7. La fraise 7 a une longueur L supérieure à l'épaisseur axiale e du disque 2 et est réalisée en carbure de tungstène ou en acier rapide. Elle comporte entre 2 et 8 dents, l'angle d'hélice de la fraise 7, c'est-à-dire l'angle compris entre l'axe de la fraise 7 et l'inclinaison de la denture, étant compris entre 10 et 20°. Le diamètre de la fraise est inférieur à sa longueur.

Le support de fraise 5 comporte également des moyens d'entraînement en rotation d'au moins une extrémité de la fraise 7, connus de l'état de la technique.

Afin de réaliser l'usinage d'un alvéole 3 d'un disque 2, la fraise 7 est approchée radialement de la périphérie externe 4 du disque 2, l'axe de rotation de la fraise étant orienté parallèlement à l'axe du disque. La fraise 7 est ensuite enfoncée dans le matériau, le contour 8 de l'alvéole 3 étant usiné par déplacement de la fraise 7 perpendiculairement à son axe le long du profil de l'alvéole 3 (le profil de l'alvéole étant sa forme dans une section par un plan perpendiculaire à l'axe du disque).

Compte tenu de la longueur L de la fraise 7, celle-ci dépasse de part et d'autre du disque 2, les bras 6 du support de fraise 5 s'étendant de chaque côté du disque 2.

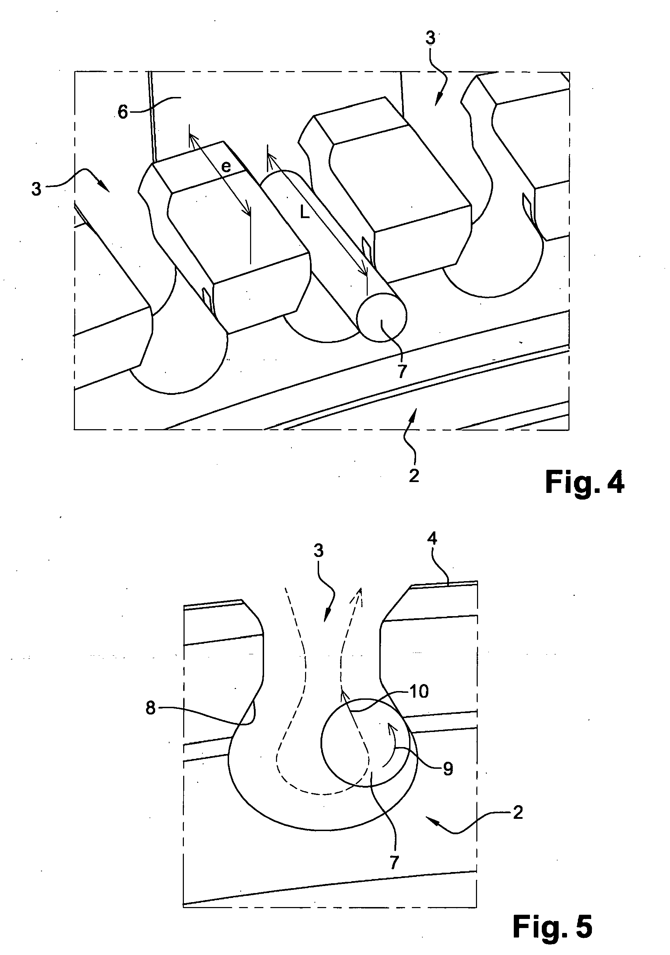

Comme cela est représenté à la figure 5, le sens de rotation 9 de la fraise est tel que le fraisage est réalisé en avalant, c'est-à-dire que le sens d'avance des dents de la fraise 7 correspond au sens d'avance 10 de la fraise par rapport au matériau à usiner. Cela permet de limiter les vibrations de la fraise et, ainsi, d'améliorer la qualité de l'usinage réalisé. La vitesse de coupe de la fraise 7 est comprise entre 40 et 70 m/min.

Le procédé peut comporter au moins une phase d'ébauche et une phase de finition, chaque phase comportant une ou plusieurs passes.

Le même procédé est répété pour chaque alvéole 3 de chaque disque 2.

## Revendications

1. Procédé d'usinage d'alvéoles (3) périphériques d'un disque (2) de turbine d'une turbomachine, telle qu'un turboréacteur ou un turbopropulseur d'avion, **caractérisé en ce qu'**il consiste à usiner les alvéoles (3) par fraisage à l'aide d'une fraise (7) sensiblement cylindrique, de longueur (L) supérieure à l'épaisseur axiale (e) du disque (2), et s'étendant sensiblement parallèlement à l'axe du disque (2), le contour (8) des alvéoles (3) étant usiné par déplacement de la fraise (7) perpendiculairement à son axe le long du profil de chaque alvéole (3).

2. Procédé d'usinage selon la revendication 1, **caractérisé en ce que** le sens de rotation (9) de la fraise (7) est tel que le fraisage est réalisé en avalant, c'est-à-dire que le sens d'avance des dents de la fraise (7) correspond au sens d'avance (10) de la fraise (7) par rapport au matériau à usiner.

3. Procédé d'usinage selon la revendication 1 ou 2, **caractérisé en ce que** le disque (2) de turbine est un disque de turbine basse pression.

4. Procédé selon l'une des revendications 1 à 3, **caractérisé en ce que** le disque (2) est réalisé en alliage à base de nickel.

5. Procédé d'usinage selon l'une des revendications 1 à 4, **caractérisé en ce que** la fraise (7) est tenue à chacune de ses extrémités par un support d'outil (5, 6), l'une au moins des extrémités de la fraise (6) étant entraînée en rotation par des moyens d'entraînement.

6. Procédé d'usinage selon l'une des revendications 1 à 5, **caractérisé en ce que** la fraise (7) est réalisée en carbure de tungstène ou en acier rapide.

7. Procédé d'usinage selon l'une des revendications 1 à 6, **caractérisé en ce que** la fraise (7) comporte entre 2 et 8 dents, l'angle d'hélice de la fraise (7), c'est-à-dire l'angle compris entre l'axe de la fraise (7) et l'inclinaison de la denture, étant compris entre 10 et 20°.

8. Procédé d'usinage selon l'une des revendications 1 à 7, **caractérisé en ce que** la vitesse de coupe de la fraise (7) est comprise entre 40 et 70 m/min.

9. Procédé d'usinage selon l'une des revendications 1 à 8, **caractérisé en ce qu'**il comprend au moins une phase d'ébauche et une phase de finition.

## Patentansprüche

1. Verfahren zum Bearbeiten von umfänglichen Hohlräumen (3) einer Turbinenscheibe (2) einer Turbomaschine bzw. eines Turbinentriebwerks, wie etwa eines Turbostrahltriebwerks oder Turbopropellertriebwerks für Flugzeuge, **dadurch gekennzeichnet, dass** es darin besteht, die Hohlräume (3) durch Fräsen mit Hilfe eines im Wesentlichen zylindrischen Fräsers (7) zu bearbeiten, dessen Länge (L) größer als die axiale Dicke (e) der Scheibe (2) ist und der sich im Wesentlichen parallel zur Achse der Scheibe (2) erstreckt, wobei die Kontur (8) der Hohlräume (3) durch Verlagerung des Fräsers (7) senkrecht zu seiner Achse entlang des Profils eines jeden Hohlraums (3) bearbeitet wird.

2. Bearbeitungsverfahren nach Anspruch 1, **dadurch gekennzeichnet**, das die Drehrichtung (9) des Fräsers (7) derart ist, dass das Fräsen im Gleichlauf erfolgt, d. h. dass die Vorschubrichtung der Zähne des Fräsers (7) der Vorschubrichtung (10) des Fräsers (7) bezüglich des zu bearbeitenden Materials entspricht.

3. Bearbeitungsverfahren nach Anspruch 1 oder 2, **dadurch gekennzeichnet, dass** die Turbinenscheibe (2) eine Niederdruckturbinenscheibe ist.

4. Verfahren nach einem der Ansprüche 1 bis 3, **dadurch gekennzeichnet, dass** die Scheibe (2) aus einer Legierung auf Nickelbasis hergestellt ist.

5. Bearbeitungsverfahren nach einem der Ansprüche 1 bis 4, **dadurch gekennzeichnet, dass** der Fräser (7) an jedem seiner Enden von einem Werkzeughalter (5, 6) gehalten wird, wobei zumindest eines der Enden des Fräsers (6) über Antriebsmittel drehend angetrieben wird.

6. Bearbeitungsverfahren nach einem der Ansprüche 1 bis 5, **dadurch gekennzeichnet, dass** der Fräser (7) aus Wolframcarbid oder aus Schnellarbeitsstahl hergestellt ist.

7. Bearbeitungsverfahren nach einem der Ansprüche 1 bis 6, **dadurch gekennzeichnet, dass** der Fräser (7) zwischen 2 und 8 Zähne enthält, wobei der Drallwinkel des Fräsers (7), d. h. der Winkel zwischen der Achse des Fräsers (7) und der Neigung der Verzahnung zwischen 10 und 20° beträgt.

8. Verarbeitungsverfahren nach einem der Ansprüche 1 bis 7, **dadurch gekennzeichnet, dass** die Schneidgeschwindigkeit des Fräsers (7) zwischen 40 und 70 m/min beträgt.

9. Verarbeitungsverfahren nach einem der Ansprüche 1 bis 8, **dadurch gekennzeichnet, dass** es zumindest eine Schruppphase und eine Schlichtphase umfasst.

## Claims

1. A machining method for machining peripheral slots (3) in a turbine disk (2) of a turbine engine, such as an airplane turboprop or turbojet, the method being **characterized in that** it consists in machining the slots (3) by reaming using a substantially cylindrical reamer (7) of length (L) greater than the axial thickness (e) of the disk (2), and extending substantially parallel to the axis of the disk (2), the outlines (8) of the slots (3) being machined by moving the reamer (7) perpendicularly to its axis along the profile of each slot (3).

2. A machining method according to claim 1, **characterized in that** the direction of rotation (9) of the reamer (7) is such that the reaming is performed by climb milling, i.e. the direction of advance of the teeth of the reamer (7) corresponds to the direction (10) of advance of the reamer (7) relative to the material that is to be machined.

3. A machining method according to claim 1 or claim 2, **characterized in that** the turbine disk (2) is a low pressure turbine disk.

4. A method according to any one of claims 1 to 3, **characterized in that** the disk (2) is made of nickel-based alloy.

5. A machining method according to any one of claims 1 to 4, **characterized in that** the reamer (7) is held at each of its ends by a tool support (5, 6), at least one of the ends of the reamer (7) being driven in rotation by drive means.

6. A machining method according to any one of claims 1 to 5, **characterized in that** the reamer (7) is made of tungsten carbide or of high-speed steel.

7. A machining method according to any one of claims 1 to 6, **characterized in that** the reamer (7) has two to eight teeth, the helix angle of the reamer (7), i.e. the angle between the axis of the reamer (7) and the inclination of the teeth, lying in the range 10° to 20°.

8. A machining method according to any one of claims 1 to 7, **characterized in that** the cutting speed of the reamer (7) lies in the range 40 m/min to 70 m/min.

9. A machining method according to any one of claims 1 to 8, **characterized in that** it includes at least a blanking stage and a finishing stage.
